# EUROPÄISCHE PATENTSCHRIFT

(11) **EP 0 675 761 B1**
(45) Veröffentlichungstag und Bekanntmachung des Hinweises auf die Patenterteilung: **08.04.1998**
(21) Anmeldenummer: 94903820.2
(22) Anmeldetag: 17.12.1993
(51) Int. Cl.: B01J 47/08, B01J 49/00, B01D 61/44, B01D 61/58

(54) **VERFAHREN UND ANLAGE ZUR BEHANDLUNG EINER WÄSSRIGEN LÖSUNG DURCH IONENAUSTAUSCH**
METHOD AND INSTALLATION FOR TREATING AN AQUEOUS SOLUTION BY ION EXCHANGE
PROCEDE ET INSTALLATION PERMETTANT DE TRAITER UNE SOLUTION AQUEUSE PAR ECHANGE D'IONS

(30) Priorität: 24.12.1992 DE 4244060
(43) Veröffentlichungstag der Anmeldung: 11.10.1995
(73) Patentinhaber: Grünbeck Wasseraufbereitung GmbH, D-89420 Höchstädt (DE); FORSCHUNGSZENTRUM JÜLICH GMBH, 52425 Jülich (DE)
(72) Erfinder: BÜCHLER, Heinrich, CH-4106 Therwil (CH); GOLLNISCH, Carsten, D-89420 Höchstädt (DE); PATOCKA, Friedrich, D-89407 Dillingen (DE); NEUMEISTER, Herbert, D-52428 Jülich (DE); FÜRST, Leander, D-52428 Jülich (DE); FLUCHT, Reinhold, D-52428 Jülich (DE)
(74) Vertreter: Prüfer, Lutz H., Dipl.-Phys.
(86) Internationale Anmeldenummer: EP9303595
(87) Internationale Veröffentlichungsnummer: WO9414538

(56) Entgegenhaltungen:
- EP-A- 0 170 895
- EP-A- 0 337 050
- EP-A- 0 473 087
- GB-A- 2 249 307
- US-A- 2 689 826
- US-A- 2 708 658
- US-A- 2 794 777
- US-A- 4 671 863
- US-A- 4 983 267
- DATABASE WPI Section Ch, Week 7731, Derwent Publications Ltd., London, GB; Class J03, AN 77-54559Y & JP,A,52 024 989 (MITSUBISHI HEAVY IND KK) 24. Februar 1977

## Beschreibung

Die Erfindung bezieht sich auf ein Verfahren zur Behandlung wäßriger Lösungen durch Ionenaustausch, insbesondere zur Wasserentsalzung und -enthärtung. Sie bezieht sich auch auf eine Anlage zur Behandlung einer wäßrigen Lösung durch Ionenaustausch, insbesondere zur Wasserentsalzung und -enthärtung.

Verdünnte wäßrige Lösungen zur Entsalzung oder Entcarbonisierung mit Ionenaustauschern (Kationenaustauschern oder Anionenaustauschern) zu behandeln, ist bekannt. Die Austauscher reichern sich dabei jeweils mit den der Lösung entzogenen Ionen an und müssen periodisch gereinigt werden, wobei die Reversibilität des Ionenaustausches genutzt und Kationenaustauscher mit Säuren, Anionenaustauscher mit Basen regeneriert werden.

Ein Verfahren und eine Anlage der eingangs beschriebenen Art sind aus der US-PS 2 812 300 oder des EP 0 337 050 A1 bekannt. Es erfolgt eine elektrochemische Regeneration der Ionenaustauscher in Elektrolysezellen. Dabei wird diskontinuierlich verfahren, auf eine Wasserentsalzungs- oder - entcarbonisierungsphase unter Kationen- oder Anionenaustausch folgt eine elektrochemische Regenerationsphase zur Abreicherung des Ionenaustauschers. In der Regenerationsphase gehen die vom Ionenaustauscher aus dem Wasser aufgenommenen Salze oder Carbonate elektrolytisch wieder in Lösung und werden von einem den Ionenaustauscher umgebenden Spülmittel (Wasser) aus der Elektrolysezelle abgeführt. Für den Phasenwechsel ist die Beladungsgrenze des Ionenaustauscherbettes entscheidend. Um einen steten Betrieb zu ermöglichen, werden zumindest zwei Ionentauscherbetten parallel geschaltet und von der zu entsalzenden oder zu entcarbonisierenden Lösung alternierend durchströmt.

Aus der US-A-2 708 658, der EP-A-0 473 087, der EP-A-0 170 895 und der GB-A-2 249 307 sind jeweils Elektrodialyse- (ED)-Anlagen bekannt, bei denen die zu behandelnde Lösung durch einen durch Ionenaustauschermembrane abgetrennten Raum durchströmt. Elektroden, die eine Anode und eine Kathode darstellen, sind außerhalb des Raumes vorgesehen. Die EP-A-0 473 087 und die EP-A-0 170 895 offenbaren zusätzlich, daß der Raum mit einem Ionenaustauscherharz gefüllt ist. Schließlich offenbart die GB-A-2 249 307, daß der ED-Anlage eine Umkehrosmoseanlage nachgeschaltet ist. Das Konzentrat der Umkehrosmoseanlage wird zur neuerlichen Behandlung der ED-Anlage zugeführt.

Aufgabe der Erfindung ist es, die Behandlung von wäßrigen Lösungen in einem Ionenaustauscherbett ohne die oben diskutierten Nachteile zu ermöglichen.

Diese Aufgabe wird gemäß der Erfindung durch das Verfahren mit den im Patentanspruch 1 angegebenen Maßnahmen gelöst.

Es wird auf diese Weise ein Gleichgewicht zwischen Beladungsgrad des Ionenaustauscherbettes und der Trennwand einerseits und dem Abreicherungsgrad der aus dem Ionenaustauscher abströmenden Lösung andererseits erreicht. Die Kationen- bzw. Anionenwanderung durch die Trennwand wird von der eingestellten Stromdichte in der elektrochemischen Zelle bestimmt. Am Ausgang des Ionenaustauscherbettes ist kontinuierlich eine Lösung mit vorbestimmtem konstanten Salzgehalt oder Härtegrad entnehmbar.

Bevorzugte Ausgestaltungen des Verfahrens sind in den zugehörigen Unteransprüchen angegeben. Von wesentlicher Bedeutung ist der Einsatz eines Ionenaustauscherbettes, das die zu behandelnde Lösung durchströmt. Die Ionenaustauschermembran umschließt das Ionenaustauschbett. Um eine weitere Abreicherung des in der elektrochemischen Zelle behandelten Wassers zu erreichen, wird das entsalzte Wasser durch Umkehrosmose weiter behandelt. Dabei ist das bei der Umkehrosmose gebildete Anionen enthaltende Konzentrat als Spülflüssigkeit zu verwenden oder der Spülflüssigkeit zur Einstellung ihrer Anionenkonzentration zuzugeben. Vor Eintritt in die Umkehrosmosenlage wird das vom Ionenaustauscher abströmende entsalzte Wasser noch entchlort und entgast. Zum Entchloren wird ein Aktivkohlefilter eingesetzt. Vor der Umkehrosmose läßt sich dem Wasser noch Rohwasser zumischen. Damit wird der pH-Wert des Wassers vor Eintritt in die Umkehrosmosenlage wieder erhöht. Die zuzumischende Rohwassermenge wird so eingestellt, daß das der Umkehrosmoseanlage zufließende Wasserkarbonat frei bleibt.

Die Aufgabe wird ebenfalls durch eine Anlage mit den Merkmalen des Patentanspruches 10 gelöst.

Bevorzugte Ausgestaltungen der Anlage sind in den zugehörigen Unteransprüchen angegeben.

Nachfolgend werden das erfindungsgemäße Verfahren und eine zur Durchführung des Verfahrens geeignete Anlage sowie weitere Vorteile und Zweckmäßigkeiten der Erfindung anhand von Ausführungsbeispielen näher erläutert. Die Zeichnung zeigt im einzelnen:
- Fig. 1:: Querschnitt einer elektrochemischen Zelle mit Ionenaustauscherbett zur Enthärtung und Entsalzung von Wasser,
- Fig. 2:: Blockschaltbild einer Wasserentsalzungsanlage mit elektrochemischer Zelle und Umkehrosmoseanlage.

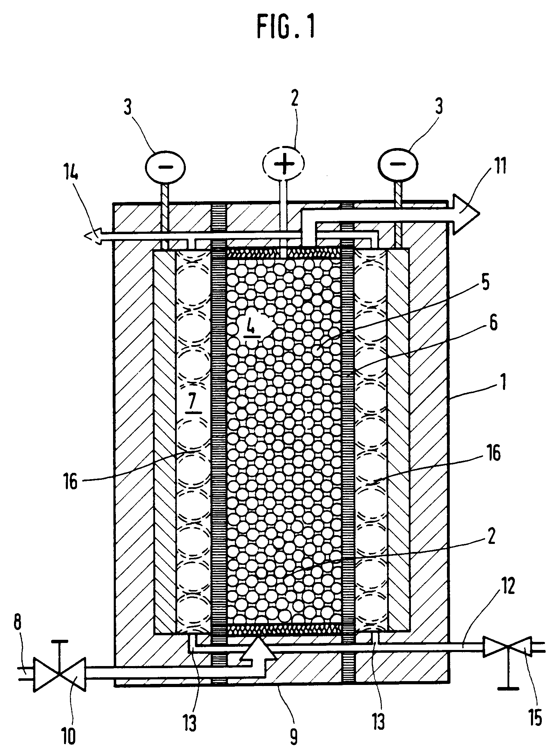

In Fig. 1 ist schematisch ein Querschnitt einer elektrochemischen Zelle 1 mit einer zentral in der Zelle angeordneten plattenförmigen Anode 2 und zwei beidseitig der Anode 2 angeordneten plattenförmigen Kathoden 3 dargestellt. Anode und Kathoden sind elektrisch mit einer in Fig. 1 nicht wiedergegebenen Gleichspannungsquelle verbunden. Im Anodenraum 4 befindet sich im Ausführungsbeispiel ein Ionenaustauscherbett 5 mit einem bei dieser Ausführungsform kationischen Austauscherharz, das von einer Ionenaustauschermembran 6 umschlossen und mittels der Membran vom Kathodenraum 7 der elektrochemischen Zelle 1 abgeschirmt ist. Für das Verfahren ist das Ionenaustauschbett nicht zwingend erforderlich. Das Ionenaustauscherbett erhöht den beim Durchlauf der Lösung erzielbaren Entsalzungsgrad. Der Anodenraum 4 wird in diesem Ausführungsbeispiel von zu enthärtendem Rohwasser durchflossen. Das Rohwasser ist aus einer Rohwasserleitung 8 über einen Rohwassereintritt 9 mit Einlaßregler 10 einleitbar. Das Rohwasser strömt zur Entcarbonisierung durch das Ionenaustauscherbett 5 und verläßt den Anodenraum 4 enthärtet über einen Wasseraustritt 11.

Im Kathodenraum 7 fließt ein Spülmittel 12 an der vom Ionenaustauscherbett 5 abgewandten äußeren Seite der Ionenaustauschermembran 6 entlang. Das Spülmittel läuft in den Kathodenraum 7 am Spülmitteleintritt 13 ein und verläßt den Kathodenraum am Spülmittelaustritt 14. Die eintretende Spülmittelmenge wird durch Einstellen eines Durchsatzreglers 15 eingestellt. Vom Spülmittel werden die durch die Ionenaustauschermembran 6 hindurchtretenden Kationen kontinuierlich aus dem Kathodenraum 7 der elektrochemischen Zelle 1 abgeführt. Zur Vermeidung von Hydroxidfällungen in und an der Membran sind dem Spülmittel Anionen zugegeben.

Im Ausführungsbeispiel ist im Kathodenraum 7 zwischen jeder der beiden Kathoden 3 und der Ionenaustauschermembran 6 zur Stütze ein Abstandhalter 16 aus elektrisch nicht leitendem Material eingesetzt.

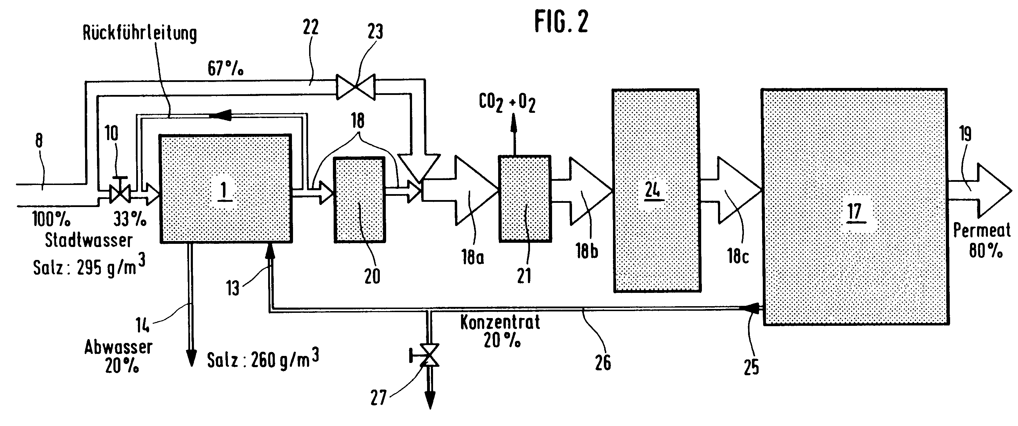

Figur 2 zeigt die elektrochemische Zelle 1 in Verbindung mit einer nachgeschalteten Umkehrosmoseanlage 17, in die das aus der elektrochemischen Zelle am Wasseraustritt 11 ausströmende enthärtete Wasser über eine Verbindungsleitung 18 mit Teilstücken 18 a, 18 b, 18 c eintritt. In der Umkehrosmoseanlage 17 wird das enthärtete Wasser weiter abgereichert und noch vorhandene Ionen entzogen. Am Permeatausgang 19 fließt Wasser mit vorgegebener geringen elektrischen Leitfähigkeit ab.

Vor Eintritt in die Umkehrosmoseanlage 17 durchströmt das Wasser noch einen Aktivkohlefilter 20 zur Entfernung von im Wasser enthaltenem Chlor und eine Entgasungskammer 21 mit einem Gasausgang für CO₂ und O₂.

Vor der Entgasungskammer 21 mündet in die Verbindungsleitung 18 eine an der Rohwasserleitung 8 angeschlossene Rohwasserzweigleitung 22. Die Rohwasserzugabe ist über ein Regelventil 23 einstellbar. Der Umkehrosmoseanlage 17 ist im Ausführungsbeispiel noch ein Puffertank 24 vorgeschaltet.

In der Umkehrosmoseanlage 17 anfallendes Konzentrat wird im Ausführungsbeispiel zur Anionenanreicherung des Spülmittels 12 genutzt. Hierzu ist vom Konzentratausgang 25 eine Konzentratleitung 26 zum Spülmitteleintritt 13 geführt. Die in das Spülmittel eintretende Konzentratmenge wird über einen in der Konzentratleitung 26 eingesetzten Konzentratregler 27 vorgegeben.

### Ausführungsbeispiel 1:

Im Anodenraum 4 der elektrochemischen Zelle 1 bildet ein starksaures Kationenaustauscherharz ein Ionenaustauscherbett 5, das von einer Kationenaustauschermembran umschlossen ist.

Durchsetzt wird das Ionenaustauscherbett von Rohwasser mit einem Härtegrad von 12°dh. In der elektrochemischen Zelle 1 ist eine Stromdichte mit Werten zwischen 5 und 10 mA/cm² einstellbar. Als Spülflüssigkeit, die den Kathodenraum 7 der elektrochemischen Zelle 1 durchströmt, wird mit Anionen im Bereich zwischen 4 x 10⁻³ bis 10⁻¹ Mol/l Anionen angereichertes Wasser verwendet. Im Ausführungsbeispiel wer den dem Wasser 2 g NaCl/l zugesetzt. Das Verhältnis der Volumendurchflüsse von Rohwasser zu Spülflüssigkeit beträgt 10 : 1 (Rohwassermenge : Spülflüssigkeitsmenge).

Unter diesem Betriebsbedingungen konnte vom Wasseraustritt 11 der elektrochemischen Zelle 1 enthärtetes Wasser mit einem Härtegrad von 0,5° - 4° dH und einem pH-Wert von ca. 2, 4 entnommen werden.

Eine Hydroxidfällung in der Ionenaustauschermembran oder die Bildung von Hydroxidschlamm im Kathodenraum der elektrochemischen Zelle traten nicht auf.

Gemäß einer anderen Ausführungsform wird in einer Anlage nach Fig. 2 mit elektrochemischer Zelle 1 und Umkehrosmoseanlage 17 Stadtwasser entsalzt. Von der insgesamt in der Anlage gereinigten Stadtwassermenge werden etwa ein Drittel zur Entkarbonisierung über den Rohrwassereintritt 9 in die elektrochemische Zelle 1 eingeführt, die restlichen zwei Drittel des Stadtwassers strömen über die Rohwasserzweigleitung 22 zur Verbindungsleitung 18 zwischen elektrochemischer Zelle 1 und Umkehrosmoseanlage 17 und werden hier dem entkarbonisierten und im Aktivkohlefilter 20 zuvor noch entchlortem Wasser zugemischt. Nach Zumischen von Stadtwasser wird vor der Weiterleitung in die Umkehrosmoseanlage dieses Wassergemisch noch entgast, aus der Entgasungskammer 21 entweichen im wesentlichen die an der Anode 2 im Anodenraum 4 gebildeten Gase CO₂ und O₂.

Das in der Umkehrosmoseanlage 17 gebildete Konzentrat wird im Ausführungsbeispiel als Spülflüssigkeit vollständig in den Kathodenraum 7 der elektrochemischen Zelle 1 eingeführt. Eine Verdünnung des Konzentrats mit Wasser vor Eintritt in die elktrochemische Zelle ist möglich.

## Patentansprüche

1. Verfahren zur Behandlung einer wäßrigen Lösung durch Ionenaustausch,
insbesondere zur Wasserentsalzung und -enthärtung,
bei dem die zu behandelnde Lösung mit einem Ionenaustauscher aus einem Ionenaustauscherbett (5) und einer Ionenaustauschermembran (6) in Kontakt gebracht wird und dabei aus der Lösung zu entfernende Ionen an den Ionenaustauscher abgibt,
bei dem die zu behandelnde Lösung einen von der Ionenaustauschermembran (6) umgebenen und das Ionenaustauscherbett enthaltenden, abgetrennten Raum (4) durchströmt,
bei dem durch Anordnung einer Anode (2) oder einer Kathode (3) einer elektrochemischen Zelle (1) in dem abgetrennten Raum (4) eine Ionenwanderung erzeugt wird, wobei die Ionenaustauschermembran (6) auf ihrer dem von der Lösung durchströmten Raum (4) abgewandten Außenseite von einer Spülflüssigkeit (12) umgeben ist,
bei dem während der Behandlung der Lösung durch Ionenaustausch die abgereicherten Kationen oder Anionen durch die Ionenaustauschermembran (6) hindurch in die die Ionenaustauschermembran (6) zum Abtransport der Ionen kontinuierlich umspülende Spülflüssigkeit (12) eingeführt werden und
bei dem während der Behandlung der Lösung der Ionenaustauscher durch Elektrolyse regeneriert wird und die aus dem Ionenaustauscher dabei herausgelösten Ionen durch ein Spülmittel (12) entfernt werden.

2. Verfahren zur Behandlung einer wäßrigen Lösung durch Ionenaustausch nach Anspruch 1,
dadurch gekennzeichnet,
daß als Spülmittel (12) eine mit nichtausfällbaren Anionen versehene Flüssigkeit verwendet wird.

3. Verfahren nach Anspruch 1 oder 2,
dadurch gekennzeichnet,
daß die Lösung nach der Behandlung im Ionenaustausch durch umgekehrte Osmose weiter gereinigt wird.

4. Verfahren nach Anspruch 3,
dadurch gekennzeichnet,
daß das bei der umgekehrten Osmose verbleibende Konzentrat dem Spülmittel (12) zugefügt wird oder das Spülmittel bildet.

5. Verfahren nach einem der Ansprüche 1 bis 4,
dadurch gekennzeichnet,
daß die Lösung nach der Behandlung im Ionenaustausch durch einen Aktivkohlefilter (20) entchlort wird.

6. Verfahren nach einem der Ansprüche 1 bis 5,
dadurch gekennzeichnet,
daß die Lösung nach der Behandlung im Ionenaustausch entgast wird.

7. Verfahren nach einem der vorhergehenden Ansprüche,
dadurch gekennzeichnet,
daß ein Teil der aus dem Ionenaustausch austretenden behandelten Lösung zum Rohwassereintritt (9) zurückgeführt wird.

8. Verfahren nach einem der Ansprüche 3 bis 7,
dadurch gekennzeichnet,
daß der im Ionenaustausch behandelten Lösung vor Eintritt in die Umkehrosmoseeinrichtung (17) Rohwasser zugemischt wird.

9. Anlage zur Durchführung des Verfahrens nach Anspruch 1,
mit einer elektrochemischen Zelle (1) mit einer Anode (2) und einer Kathode (3) und einer die Anode (2) oder die Kathode (3) umgebenden, einen Raum (4) abtrennenden, ionendurchlässigen Ionenaustauschermembran (6),
mit einem Zu- und Ablauf (9, 11) für eine im Ionenaustausch zu behandelnde, durch den Raum (4) geführte Lösung, und
mit einem Ein- und Austritt (13, 14) für eine die Trennwand auf ihrer der Lösung abgewandten Außenseite umgebende Spülflüssigkeit (12).

10. Anlage zur Durchführung des Verfahrens nach Anspruch 1,
mit einer elektrochemischen Zelle (1) mit einer Anode (2) und einer Kathode (3) und einer zwischen der Anode (2) und der Kathode (3) angeordneten, einen die Anode oder Kathode enthaltenden Raum (4) abtrennenden, ionendurchlässigen Trennwand,
mit einem Zu- und Ablauf (9, 11) für eine im Ionenaustausch zu behandelnde, durch den Raum (4) geführte Lösung, und
mit einem Ein- und Austritt (13, 14) für eine die Trennwand auf ihrer der Lösung abgewandten Außenseite umgebende Spülflüssigkeit (12),
wobei als Trennwand eine Ionenaustauschermembran (6) eingesetzt ist und und die Anlage so ausgelegt ist, daß die zu behandelnde Lösung und die Spülflüssigkeit (12) die elektrochemische Zelle (1) kontinuierlich durchsetzen.

11. Anlage nach Anspruch 9,
dadurch gekennzeichnet,
daß die Ionenaustauschermembran (6) ein von der zu behandelnden Lösung durchströmtes Ionenaustauschbett (5) umgibt.

12. Anlage nach Anspruch 9 oder 10,
dadurch gekennzeichnet,
daß dem Ablauf (11) eine Umkehrosmoseeinrichtung (17) nachgeschaltet ist.

13. Anlage nach Anspruch 11,
dadurch gekennzeichnet,
daß eine Konzentratleitung (26) den Konzentratausgang (25) der Umkehrosmoseeinrichtung (17) mit dem Spülflüssigkeitseintritt (13) verbindet.

14. Anlage nach einem der Ansprüche 10 bis 12,
dadurch gekennzeichnet,
daß dem Ablauf (11) ein Aktivkohlefilter (20) nachgeschaltet ist.

15. Anlage nach einem der Ansprüche 10 bis 13,
dadurch gekennzeichnet,
daß dem Ablauf (11) eine Entgasungskammer (21) nachgeschaltet ist.

16. Anlage nach einem der Ansprüche 10 bis 14,
dadurch gekennzeichnet,
daß eine Rückführleitung den Ablauf (11) mit dem Zulauf (9) verbindet.

17. Anlage nach Anspruch 13 oder 14,
dadurch gekennzeichnet,
daß der Aktivkohlefilter (20), die Entgasungskammer (21) und die Umkehrosmoseanlage (17) in Reihe dem Ionenaustauscher nachgeschaltet sind.

18. Anlage nach Anspruch 16,
dadurch gekennzeichnet,
daß vor der Umkehrosmoseanlage (17) eine Rohwasserzweigleitung (22) in eine vom Aktivkohlefilter ausgehende Verbindungsleitung (18a) mündet.

## Claims

1. A method for the treatment of an aqueous solution by ion exchange,
in particular for the desalination and softening of water,
wherein the solution to be treated is brought into contact with an ion exchanger consisting of an ion exchanger bed (5) and an ion exchanger membrane (6) and in this process gives off ions to the ion exchanger, which are to be removed from the solution,
wherein the solution to be treated flows through a partitioned-off space (4) surrounded by the ion exchanger membrane (6) and containing the ion exchanger bed,
wherein by the arrangement of an anode (2) or a cathode (3) of an electrochemical cell (1), an ion migration is produced in the partitioned-off space (4), in which arrangement the ion exchanger membrane (6) is surrounded by a flushing liquid (12) on its outer side remote from the space (4) traversed by the solution,
wherein during the treatment of the solution by ion exchange, the stripped cations or anions are introduced through the ion exchanger membrane (6) into the flushing liquid (12) continuously flowing round the ion exchanger membrane (6) for the removal of the ions and
wherein the ion exchanger is regenerated by electrolysis during the treatment of the solution, and the ions released in this process from the ion exchanger are removed by a flushing medium (12).

2. A method for the treatment of an aqueous solution by ion exchange according to claim 1,
characterized in that
a liquid provided with non-precipitable anions is used as the flushing medium (12).

3. A method according to claim 1 or 2,
characterized in that
the solution is further purified by reverse osmosis after its ion exchange treatment.

4. A method according to claim 3,
characterized in that
the concentrate remaining during the reverse osmosis is added to the flushing liquid (12), or forms the flushing medium.

5. A method according to one of claims 1 to 4,
characterized in that
the solution is dechlorinated by means of an activated charcoal filter (20) after its ion exchange treatment.

6. A method according to one of claims 1 to 5,
characterized in that
the solution is degassed after its ion exchange treatment.

7. A method according to one of the preceding claims,
characterized in that
a portion of the solution emerging from the ion exchange is returned to the intake (9) for the untreated water.

8. A method according to one of claims 3 to 7,
characterized in that
untreated water is admixed to the solution treated in the ion exchange before its entry into the reverse osmosis device (17).

9. An installation for the operation of the method according to claim 1,
with an electrochemical cell (1) with an anode (2) and a cathode (3) and with an ion exchanger membrane (6) surrounding the anode (2) or the cathode (3) and partitioning off a space (4) permeable to ions,
with an intake and outlet (9, 11) for a solution to be treated by ion exchange and passed through the space (4), and
with an inlet and outlet (13, 14) for a flushing liquid (12) surrounding the partition on its outer side remote from the solution.

10. An installation for the operation of the method according to claim 1, with an electrochemical cell (1) with an anode (2) and a cathode (3) and a partition permeable to ions arranged between the anode (2) and the cathode (3) and containing the anode or cathode and partitioning off a space (4),
with an intake and outlet (9, 11) for a solution to be treated by ion exchange and passed through the space (4), and
with an inlet and outlet (13, 14) for a flushing liquid (12) surrounding the partition on its outer side remote from the solution,
wherein an ion exchanger membrane (6) is used as the partition, and the installation is designed in such a way that the solution to be treated and the flushing liquid (12) continuously pass through the electrochemical cell (1).

11. An installation according to claim 9,
characterized in that
the ion exchanger membrane (6) surrounds an ion exchanger bed (5) traversed by the solution to be treated.

12. An installation according to claim 9 or 10
characterized in that
the outlet (11) is followed by a reverse osmosis device (17).

13. An installation according to claim 11,
characterized in that
a line (26) for the concentrate connects the concentrate outlet (25) of the reverse osmosis device (17) to the inlet (13) for the flushing liquid.

14. An installation according to one of claims 10 to 12,
characterized in that
the outlet (11) is followed by an activated charcoal filter (20).

15. An installation according to one of claims 10 to 13,
characterized in that
the outlet (11) is followed by a degassing chamber (21).

16. An installation according to one of claims 10 to 14,
characterized in that
a return line connects the outlet (11) to the intake (9).

17. An installation according to claim 13 or 14,
characterized in that
the activated charcoal filter (20), the degassing chamber (21) and the reverse osmosis device (17) are disposed in series down the line from the ion exchanger.

18. An installation according to 16,
characterized in that
a branch line (22) for untreated water leads ahead of the reverse osmosis device (17) into a connecting line (18a) starting from the activated charcoal filter.

## Revendications

1. Procédé de traitement d'une solution aqueuse par échange d'ions, en particulier pour le dessalement et l'adoucissement de l'eau,
selon lequel la solution à traiter est mise en contact avec un échangeur d'ions constitué d'un lit (5) d'échange d'ions et d'une membrane (6) d'échange d'ions, ce qui entraîne le transfert des ions à éliminer de la solution vers l'échangeur d'ions,
selon lequel la solution à traiter traverse un espace séparé (4), entouré par la membrane (6) et contenant le lit échangeur d'ions,
selon lequel est générée une migration d'ions par la disposition d'une anode (2) ou d'une cathode (3) d'une cellule électrochimique (1) a l'intérieur de l'espace séparé (4), la membrane (6) étant entourée d'un liquide de rinçage (12) sur son côté extérieur non orienté vers l'espace (4) traversé par la solution,
selon lequel, pendant le traitement de la solution par échange d'ions, les cations ou les anions enrichis sont introduits, à travers la membrane (6), dans le liquide de rinçage (12) qui rince de manière continue ladite membrane (6) afin d'évacuer les ions , et
selon lequel, pendant le traitement de la solution, l'échangeur d'ions est régénéré par électrolyse, et les ions qui en sont alors évacués sont éliminés à l'aide d'un moyen de rinçage (12).

2. Procédé de traitement d'une solution aqueuse par échange d'ions selon la revendication 1, caractérisé en ce que pour servir de moyen de rinçage (12), on utilise un liquide contenant des anions ne pouvant pas être précipités.

3. Procédé selon la revendication 1 ou 2, caractérisé en ce que, après son traitement par échange d'ions, la solution subit une épuration complémentaire par osmose inversée.

4. Procédé selon la revendication 3, caractérisé en ce que le concentrât qui subsiste après l'osmose inversée, est amené vers le moyen de rinçage (12) ou bien constitue luimême ce moyen de rinçage.

5. Procédé selon l'une des revendications 1 à 4, caractérisé en ce qu'après son traitement par échange d'ions, la solution est déchlorée au moyen d'un filtre à charbon actif (20).

6. Procédé selon l'une des revendications 1 à 5, caractérisé en ce qu'après son traitement par échange d'ions, la solution est dégazée.

7. Procédé selon l'une des revendications précédentes, caractérisé en ce qu'une partie de la solution traitée sortant de l'échangeur d'ions est reconduite vers l'entrée (9) de l'eau non traitée.

8. Procédé selon l'une des revendications 3 à 7, caractérisé en ce que de l'eau non traitée est mélangée à la solution traitée par échange d'ions avant son entrée dans le dispositif (17) d'osmose inversée.

9. Installation pour la mise en oeuvre du procédé conforme à la revendication 1, comportant une cellule électrochimique (1) munie d'une anode (2) et d'une cathode (3) et d'une membrane échangeuse d'ions (6), perméable aux ions, qui délimite un espace (4) entourant l'anode (2) ou la cathode (3),
comportant une entrée et une sortie (9, 11) pour une solution à traiter par échange d'ions, conduite à travers l'espace (4), et
comportant une entrée et une sortie (13, 14) pour un liquide de rinçage (12) entourant la paroi de séparation sur sa face extérieure non orientée vers la solution.

10. Installation pour la mise en oeuvre du procédé conforme à la revendication 1, comportant une cellule électrochimique (1) munie d'une anode (2) et d'une cathode (3) et une paroi de séparation perméable aux ions disposée entre l'anode (2) et la cathode (3), qui délimite un espace (4) contenant l'anode ou la cathode,
comportant une entrée et une sortie (9, 11) pour une solution à traiter par échange d'ions, conduite à travers l'espace (4), et
comportant une entrée et une sortie (13, 14) pour un liquide de rinçage (12) entourant la paroi de séparation sur sa face extérieure non orientée vers la solution,
une membrane échangeuse d'ions (6) étant utilisée pour servir de paroi de séparation, et l'installation étant conçue de telle sorte que la solution à traiter et le liquide de rinçage (12) traversent de manière continue la cellule électrochimique (1).

11. Installation selon la revendication 9, caractérisée en ce que la membrane (6) échangeuse d'ions entoure un lit d'échange d'ions (5) traversé par la solution à traiter.

12. Installation selon la revendication 9 ou 10, caractérisée en ce qu'en aval de la sortie (11) est monté un dispositif (17) d'osmose inversée.

13. Installation selon la revendication 11, caractérisée en ce qu'une conduite (26) du concentrât relie la sortie (25) du concentrât du dispositif d'osmose inversée à l'entrée (13) du liquide de rinçage.

14. Installation selon l'une des revendications 10 à 12, caractérisée en ce qu'en aval de la sortie (11) est monté un filtre (20) à charbon actif.

15. Installation selon l'une des revendications 10 à 13, caractérisée en ce qu'en aval de la sortie (11) est montée une chambre de dégazage (21).

16. Installation selon l'une des revendications 10 à 14, caractérisée en ce qu'une conduite de retour relie la sortie (11) à l'entrée (9).

17. Installation selon la revendication 13 ou 14, caractérisée en ce que le filtre (20) à charbon actif, la chambre de dégazage (21) et le dispositif (17) d'osmose inversée sont montés en série, en aval de l'échangeur d'ions.

18. Installation selon la revendication 16, caractérisée en ce qu'en amont de l'installation (17) d'osmose inversée débouche l'embranchement (22) d'une canalisation d'eau non traitée dans une conduite (18a) de liaison, qui part du filtre à charbon à actif.
